# EUROPEAN PATENT SPECIFICATION

(11) **EP 0 319 982 B1**
(45) Date of publication and mention of the grant of the patent: **11.08.1993**
(21) Application number: 88120552.0
(22) Date of filing: 08.12.1988
(51) Int. Cl.: C08G 77/06, C08J 3/02, C08L 83/04

(54) **Method for producing precured silicone emulsion.**
Verfahren zur Herstellung partiell gehärteten Silikonemulsion.
Procédé de préparation d'une émulsion de siloxane partiellement durcis.

(30) Priority: 09.12.1987 US 130767
(43) Date of publication of application: 14.06.1989
(73) Proprietor: DOW CORNING CORPORATION, Midland Michigan 48686-0994 (US)
(72) Inventor: Liles, Donald Taylor, Midland Michigan (US)
(74) Representative: Spott, Gottfried, Dr.

(56) References cited:
- EP-A- 0 166 396
- GB-A- 2 016 494
- US-A- 3 355 406
- US-A- 4 248 751

## Description

This invention relates to a method for producing silicone emulsions which yield an elastomer upon removal of the water at ambient conditions.

Silicone emulsions which yield an elastomer upon removal of the water are known in the art. U.S. Patent No. 3,355,406, issued November 28, 1967, teaches silicone rubber latexes reinforced by adding silsesquioxane. In example 19, a composition of hydroxyl endblocked polydiorganosiloxane, silsesquioxane, methylhydrogenpolysiloxane and dibutyltin dilaurate is taught. Upon evaporation of the water from a film of the latex, a silicone rubber film was left.

Silicone paper release coatings are taught in U.S. Patent No. 4,190,688, issued February 26, 1980. The emulsion comprises a vinyl-containing polydiorganosiloxane having hydroxyl endblocking, a hydride cross-linking agent, water and an emulsifying agent. The composition can be cured either with a tin salt of a carboxylic acid or it can be cured with a platinum complex catalyst.

U.S. Patent No. 4,221,688, issued September 9, 1980, teaches a silicone emulsion having a dispersed phase of an anionically stabilized hydroxylated polydiorganosiloxane and a colloidal silica. In order to form a cured elastomer in a reasonable time, a tin catalyst is also present. Experience has now shown that such a system continues to cure in the emulsion and after drying, so the properties of the elastomer formed are dependent upon the age of the emulsion and the age of the dried film. The additional requirement of a pH of greater than 9 is also undesirable in many cases.

A latex of crosslinked silicone is prepared in U.S. Patent No. 4,248,751, issued February 3, 1981, by emulsifying a vinyl endblocked polydiorganosiloxane and an organosilicon compound having silicon-bonded hydrogen atoms with water and a surfactant, adding platinum catalyst and then heating the emulsion. Colloidal silica can be added to the emulsion to provide a tougher product.

U.S. Patent No. 4,273,634, issued June 16, 1981, teaches an emulsion comprising a continuous water phase and a dispersed phase of crosslinked silicone. The silicone phase is the product of radical produced crosslinking of hydroxyl endblocked polydiorganosiloxane which was crosslinked after it had been dispersed in water.

U.S. Patent Nos. 4,568,718 issued February 4, 1986 and EP-A-0166396, teach latexes of crosslinked polydiorganosiloxane. The latex is prepared by homogenizing a mixture of hydroxyl endblocked polydiorganosiloxane, surface active anionic catalyst and alkoxy silicon compound, then polymerizing to form a crosslinked polymer. The polymer can be reinforced by adding colloidal silica to the emulsion. An elastomer is formed when the latex is dried.

This invention relates to a method for producing an aqueous silicone emulsion which dries to give an elastomer and to methods of making such emulsions.

This invention is a method for producing an aqueous silicone emulsion which dries to an elastomer comprising (A) homogenizing a mixture of (1) 100 parts by weight of hydroxyl endblocked polydiorganosiloxane free of aliphatic unsaturation, (2) from 0.1 to 10 parts by weight of silicon hydride crosslinker, (3) anionic or nonionic surfactant, and (4) sufficient water to give a polydiorganosiloxane content in the mixture of from 40 to 70 percent by weight, (B) emulsion polymerizing the mixture of (A) by addition of anionic polymerization catalyst to obtain a polymer, then (C) arresting polymerization by raising the pH to a value of from about 6 to 11, then (D) cross linking the emulsion copolymer by addition of a silanol-silicon hydride condensation catalyst containing tin or zinc, to obtain an aqueous silicone emulsion which dries to an elastomer.

The hydroxyl endblocked polydiorganosiloxane can be chosen from any of such available materials, however, the material chosen should have a viscosity such that is can be easily emulsified, a fluid material is preferred such as a material having a viscosity of less than 250 cps at 25°C. The organic groups can be any of those commonly used in polydiorganosiloxanes (excluding groups containing aliphatic unsaturation) such as monovalent substituted and unsubstituted alkyl radicals with preferred radicals being methyl, ethyl, propyl and 3,3,3-trifluoropropyl and monovalent aryl radicals such as phenyl. A preferred polymer is a hydroxyl endblocked polydimethylsiloxane having a degree of polymerization of about 35 and a viscosity of about 80 cps at 25°C. (0.08 Pa·s).

The silicon hydride crosslinker can be chosen from a hydrolyzable silicon hydride or from a polyorganohydrogensiloxane or from an alkylhydrogencyclosiloxane. The hydrolyzable silicon hydride should have at least one, but no more than three hydrogen atoms bonded to silicon per molecule. It should have one or two hydrolyzable atoms or radicals, such as alkoxy, bonded to silicon per molecule, such as methyldiethoxysilane. A preferred crosslinker is trimethylsilyl endblocked polymethylhydrogensiloxane. Another preferred crosslinker is methylhydrogencyclosiloxane.

The amounts of the ingredients can be determined, based upon the polydiorganosiloxane (1), which is 100 parts by weight. The silicon hydride crosslinker normally varies from about 0.1 to 10 parts by weight, depending upon what crosslinker is used. A preferred embodiment uses from 0.5 to 2 parts by weight of methylhydrogencyclosiloxane. The preferred amount of silicon hydride crosslinker should give at least one mole of hydrogen on silicon for each mole of hydroxyl radical on silicon in the polydiorganosiloxane, but this is not absolutely necessary. If there is insufficient crosslinker to react with all of the hydroxyl, the resulting elastomer may be tacky on the surface and the physical properties will not be as desirable as when the amount of crosslinker is sufficient to give complete reaction with all of the hydroxyl radicals. When more than enough crosslinker is added, the excess crosslinker can condense with itself, giving domains of very high crosslink density. At some point, these high crosslink density areas lead to poorer physical properties. The optimum amount of crosslinker can be determined by experimental means with little difficulty.

The surfactant (3) can be an anionic surfactant, a nonionic surfactant or a mixture of each. Surfactants useful in emulsifying silicone fluids are well known and include alkali metal sulforicinates, sulfonated glyceryl esters of fatty acids, salts of sulfonated monovalent alcohol esters, amides of amino sulfonic acid such as the sodium salt of oleyl methyl tauride, sulfonated aromatic hydrocarbon alkali salts such as sodium alpha-naphthalene monosulfonate, condensation products of naphthalene sulfonic acids with formaldehyde and sulfates such as ammonium lauryl sulfate, triethanol amine lauryl sulfate and sodium lauryl ether sulfate. Preferred anionic surfactants are salts of the surface active sulfonic acids, as shown in U.S. Patent No. 3,294,725 issued December 27, 1966, which shows suitable anionic surfactants and sulfates. A preferred surfactant is sodium lauryl sulfate.

Nonionic surfactants can be illustrated by saponins, condensation products of fatty acids with ethylene oxide such as dodecyl ether of tetraethylene oxide, condensation products of ethylene oxide and sorbitan trioleate, condensation products of phenolic compounds having side chains with ethylene oxide such as condensation products of ethylene oxide with isododecylphenol and imine derivatives such as polymerized ethylene imine.

Sufficient water, preferably deionized, is added to the mixture to give a polymer content of from 40 to 70 percent by weight. The preferred polymer content is from 60 to 65 percent by weight.

The above described mixture is homogenized using any of the well-known and commercially available homogenizing machines. The preferred size of the dispersed particles is less than 0.5 micrometres with a preferred size being about 0.3 micrometres.

After homogenization, the emulsion is polymerized by addition of an anionic polymerization catalyst. Preferred polymerization catalysts are strong mineral acids such as hydrochloric acid or sulfuric acid as taught in U.S. Patent No. 2,891,920 issued June 23, 1959 and organic acids such as alkyl sulfonic acids as taught in U.S. Patent No. 3,294,725 issued December 27, 1966. Preferred polymerization catalysts are hydrochloric acid and dodecylbenzenesulfonic acid. A preferred method adds sufficient alkylbenzene sulfonic acid, such as dodecylbenzenesulfonic acid, to give a pH of 1 to 2. Polymerization will take place at room temperature. After about 24 hours at room temperature, the polymer produced by the polymerization of the hydroxyl endblocked polydiorganosiloxane and the silicon hydride crosslinker will reach optimum molecular weight. It is preferred that the polymer have a weight average molecular weight of from 50,000 to 500,000 with a value of about 250,000 most preferred.

The surfactant and the polymerization catalyst can be the same material, as when the material is a surface active material such as dodecylbenzene sulfonic acid.

Polymerization is arrested by raising the pH to a value of from about 6 to 11, with a preferred range of from about 6 to 7.5. When the pH is above about 7.5, the hydrogen on silicon in the silicon hydride crosslinker is prone to hydrolysis. The resulting material will still function however since the resulting condensation between hydroxyl groups on the polydiorganosiloxane and on the crosslinker is catalyzed by the catalyst present, particularly if tin is used as the catalyst. Suitable additives for raising the pH include dilute bases such as alkali metal hydroxides and organic amines. The additives for raising the pH should be diluted with water to avoid any possibility of breaking the emulsion when they are added. A preferred additive is 20 percent aqueous diethylamine.

The emulsified polymer is then crosslinked by adding to the emulsion a silanol-silicon hydride condensation catalyst. Numerous organometallic compounds and metallic salts are known to catalyze this reaction. Preferred are those based upon tin or zinc. A preferred catalyst is dialkyltindicarboxylate, such as dioctyltindilaurate. The quantity of catalyst used depends upon the time allowed for cross linking before removal of the water to give an elastomer. For example, one part dioctyltindilaurate per hundred parts of copolymer will essentially completely crosslink in about 3 days at room temperature. Crosslinking was still proceeding after two weeks when 0.1 part of this catalyst was used. The crosslinking rate can be accelerated by raising the temperature, for instance to 70°C. Hydrogen is given off during crosslinking. This evolution of hydrogen gives a convenient method of determining when crosslinking is complete. A preferred amount of dialkyltindicarboxylate is from 0.1 to 1 part per hundred parts of polymer. A preferred amount of dioctyltindilaurate is about 0.2 part by weight per 100 parts by weight of polydiorganosiloxane.

After all of the ingredients are added, the emulsion is ready for use. When the emulsion is going to be stored before use or packaged in sealed containers, it is desirable to allow the crosslinking to be completed before placing the emulsion is sealed containers, since hydrogen is given off during crosslinking and can build up pressure and a possible fire hazard if it is not allowed to escape from the emulsion as it is formed. When the emulsion is applied to a surface and allowed to dry, an elastomer results. This can be left as a protective coating, or can be removed to give an elastomeric film.

The elastomer is rather weak without reinforcement. The elastomer can be reinforced by adding a reinforcing filler to the emulsion. The elastomer produced by this process can be filled with any of the well known reinforcing or non-reinforcing fillers useful with silicone elastomers as long as the filler is chosen so that it does not effect the pH of the emulsion so that it goes out of the required range of from about 6 to 11. Common reinforcing fillers include fumed silica, colloidal silica dispersions, fumed titanium dioxide and colloidal titanium dioxide dispersions. Non-reinforcing fillers include ground quartz, calcium carbonate, non-acidic carbon black, clays, aluminum oxide, zinc oxide, mica and various coloring pigments. These fillers should be finely divided and it may be advantageous to add them as aqueous dispersions. The amount of filler added is not critical, it is chosen to give the desired effect, such as increased tensile strength, or increased hardness or increased modulus for the resulting elastomer. A preferred reinforcing filler is an aqueous, dispersed, fumed silica. A preferred non-reinforcing filler is calcium carbonate. The preferred amount of silica is from 1 to 50 parts by weight of silica per 100 parts by weight of polymer.

The following examples are included for illustrate purposes.

### Example 1

A mixture was prepared of 381.2 g of hydroxyl endblocked polydimethylsiloxane fluid having a degree of polymerization of about 35, 3.85 g of trimethylsiloxy endblocked polymethylhydrogensiloxane having a viscosity of about 0.13 Pa·s at 25°C. and a silicon-bonded hydrogen atom content of about 1.6 percent by weight, 15.9 g of a 30 percent solution of sodium lauryl sulfate and 186 g of distilled water. The mixture was homogenized by running through a laboratory single stage homogenizer two times, giving a uniform emulsion having an average particle size of about 0.32 micrometres. The emulsion was polymerized by adding 3.2 g of dodecylbenzenesulfonic acid and allowing to stand at about 25°C. for 24 hours. The polymerization was terminated by adding sufficient diethylamine to raise the pH to between 7 and 7.5. Next 30 g of the emulsion were catalyzed by adding 0.372 g of a 50 percent solids aqueous emulsion of dioctyltindilaurate (1 part tin catalyst per 100 parts copolymer). The vial was shaken to mix and allowed to stand at 25°C. for 3 days. A small quantity of the crosslinked emulsion was poured into a Petri dish to give a film and allowed to dry in air for 5 days. A silicone elastomeric film resulted.

A mixture was prepared of 10 g of the above crosslinked emulsion and 2.21 g of a 28 percent solids dispersion of fumed silica in water (Cabosperse SC-4). This was equivalent to 10 parts of silica per 100 parts of copolymer. After thorough mixing, 5 g of the reinforced emulsion was poured into a Petri dish and allowed to dry for 7 days at room temperature. The resulting film was removed from the dish and tested for physical properties , with the results shown in Table 1.

Similar reinforced emulsions were prepared, varying the amount of silica added as shown in Table 1. The resulting films were tested with the results shown in Table 1.

**Table 1**

| Fumed Silica parts | Tensile Strength MPa | Elongation percent |
|---|---|---|
| 0 | <0.3 | -- |
| 10 | 1.03 | 300 |
| 20 | 1.72 | 350 |
| 30 | 2.07 | 160 |
| 40 | crazed upon drying | |

### Example 2

A series of emulsion copolymers was made following the procedure of Example 1. Different amounts of crosslinker were used as shown in Table 2. The crosslinker was a mixture of methylhydrogencyclotetrasiloxane and methylhydrogencyclopentasiloxane. After catalyzing with 1 part of dioctyltindilaurate and aging for 4 days, the emulsions were reinforced with various amounts of the dispersed fume silica dispersion of Example 1 as shown in Table 2. The emulsions were then cast into films and allowed to air dry for 7 days, after which they were tested for physical properties with the results shown in Table 2.

**Table 2**

| Crosslinker parts | Silica parts | Tensile Strength MPa | Elongation percent |
|---|---|---|---|
| 1 | 10 | 0.93 | 400 |
| 1 | 20 | 1.72 | 350 |
| 1 | 30 | 2.41 | 300 |
| 2 | 10 | 1.38 | 270 |
| 2 | 20 | 2.23 | 200 |
| 2 | 30 | 2.93 | 200 |
| 3 | 10 | 1.10 | 120 |
| 3 | 20 | 3.10 | 170 |
| 3 | 30 | 2.58 | 100 |

### Example 3

First, 7.27 g of methyldiethoxysilane was added to 641.6 g of hydroxyl endblocked polydimethylsiloxane having a viscosity of about 0.08 Pa·s and the mixture was stirred several minutes until it became homogeneous. Then 26.5 g of a 30 percent aqueous solution of sodium lauryl sulfate and 309.8 g of distilled and deionized water were added and the mixture was stirred 30 minutes. This mixture was homogenized using a laboratory homogenizer at 52,7 N/mm² (7500 psi) for 2 passes. The emulsion was polymerized by adding enough dodecylbenzene sulfonic acid with stirring to lower pH of the emulsion to 2. Polymerization was allowed to proceed for 20 hrs at room temperature after which it was terminated by raising the pH of the emulsion to 6.5 to 7.0. This emulsion consisted of an approximately 62 percent by weight solids emulsion of hydroxyl endblocked polydimethylsiloxane/polymethylhydrogensiloxane copolymer having 0.5 weight percent methylhydrogensilyl groups. To 60 g of this emulsion was added 0.75 g of a 50 percent solids by weight aqueous emulsion of dioctyltindilaurate. The mixture was stirred for several minutes and allowed to stand at room temperature in a closed container for two days. The emulsion was poured into a petri dish and allowed to air dry for 24 hrs. The resulting film was elastomeric.

A reinforced emulsion was prepared when 20 g of the (catalyzed) emulsion was mixed with 6.2 g of aqueous, dispersed, fumed silica (Cabosperse SC-4; 90m2/g surface area, 30 percent solids, pH about 7.5) and the mixture was lightly centrifuged to exclude air bubbles. A film was cast from this mixture and after drying for two weeks under ambient conditions its mechanical properties were determined. The film had an ultimate tensile strength of 1,48 N/mm² (210 psi) and an ultimate elongation of 460 percent.

## Claims

1. A method for producing an aqueous silicone emulsion which dries to an elastomer comprising
(A) homogenizing a mixture of
(1) 100 parts by weight of hydroxyl endblocked polydiorganosiloxane free of aliphatic unsaturation,
(2) from 0.1 to 10 parts by weight of silicon hydride crosslinker,
(3) anionic or nonionic surfactant, and
(4) sufficient water to give a polydiorganosiloxane content in the mixture of from 40 to 70 percent by weight,
(B) emulsion polymerizing the mixture of (A) by addition of anionic polymerization catalyst to obtain a polymer, then
(C) arresting polymerization by raising the pH to a value of from 6 to 11, then
(D) crosslinking the emulsion copolymer by addition of a silanol-silicon hydride condensation catalyst containing tin or zinc,
to obtain an aqueous silicone emulsion which dries to an elastomer.

2. The method of claim 1 in which a filler is added.

## Patentansprüche

1. Verfahren zur Herstellung einer wässrigen Siliconemulsion, die zu einem Elastomer trocknet, gekennzeichnet durch
(A) Homogenisierung eines Gemisches aus
(1) 100 Gewichtsteilen eines von aliphatischer Ungesättigtheit freien hydroxylendblockierten Polydiorganosiloxans,
(2) 0,1 bis 10 Gewichtsteilen eines Siliciumhydrids als Vernetzungsmittel,
(3) einem anionischen oder nichtionischen oberflächenaktiven Mittel und
(4) Wasser in einer solchen Menge, dass sich im Gemisch ein Gehalt an Polydiorganosiloxan von 40 bis 70 Gewichtsprozent ergibt,
(B) Emulsionspolymerisation des Gemisches von (A) durch Zusatz eines anionischen Polymerisationskatalysators unter Bildung eines Polymers,
(C) Anhalten der Polymerisation durch Erhöhung des pH-Werts auf einen Wert von 6 bis 11 und
(D) Vernetzung des Emulsionscopolymerisats durch Zusatz eines Zinn oder Zink enthaltenden Silanol-Siliciumhydrid-Kondensationskatalysators,
unter Bildung einer wässrigen Siliconemulsion, die zu einem Elastomer trocknet.

2. Verfahren nach Anspruch 1, wobei ein Füllstoff zugesetzt wird.

## Revendications

1. Un procédé pour produire une émulsion aqueuse de silicone qui sèche en donnant un élastomère, consistant à
(A) homogénéiser un mélange de
(1) 100 parties en poids de polydiorganosiloxane bloqué terminalement par des groupes hydroxyle, exempt d'insaturation aliphatique,
(2) 0,1 à 10 parties en poids d'agent de réticulation du type hydrure de silicium,
(3) un agent tensio-actif anionique ou non-ionique, et
(4) une quantité d'eau suffisante pour donner une teneur en polydiorganosiloxane dans le mélange allant de 40 à 70 pour cent en poids,
(B) polymériser en émulsion le mélange de (A) par addition d'un catalyseur de polymérisation anionique afin d'obtenir un polymère, puis
(C) arrêter la polymérisation par élévation du pH à une valeur allant de 6 à 11, puis
(D) réticuler le copolymère de l'émulsion par addition d'un catalyseur de condensation du type hydrure de silicium-silanol contenant de l'étain ou du zinc,
pour obtenir une émulsion aqueuse de silicone qui sèche en un élastomère.

2. Le procédé de la revendication 1 dans lequel on a ajouté une charge.
